# EUROPÄISCHE PATENTANMELDUNG

(11) **EP 1 080 819 A2**
(43) Veröffentlichungstag der Anmeldung: **07.03.2001**
(21) Anmeldenummer: 00117877.1
(22) Anmeldetag: 19.08.2000
(51) Int. Cl.: B23K 11/06

(54) **Verfahren zur Beschickung einer Schweissmaschine sowie Schweissmachine und automatische Beschickungseinrichtung zu dessen Durchführung**

(30) Priorität: 03.09.1999 CH 160599; 04.10.1999 CH 181299
(71) Anmelder: ELPATRONIC AG, 8962 Bergdietikon (CH)
(72) Erfinder: Müller, Eugen, 8953 Dietikon (CH)

(57) **Zusammenfassung**

Bei einer von vorne beschickbaren Rollnahtschweissmaschine zur Durchführung einer Überlappnaht ist die vor der Z-Schiene (6) angeordnete Schweissrolle (8) wegschwenkbar (C) angeordnet, um das automatische Beschicken des Schweissgutes in die Z-Schiene zu erleichtern.

## Beschreibung

Die Erfindung betrifft ein Verfahren zur Beschickung einer Schweissmaschine gemäss Oberbegriff des Anspruchs 1. Ferner betrifft die Erfindung eine Rollnahtschweissmaschine gemäss Oberbegriff des Anspruchs 10 und eine automatische Beschickungseinrichtung nach Anspruch 13 sowie eine Anordnung von zwei Rollnahtschweissmaschinen gemäss Anspruch 19.

Handbeschickbare Schweissmaschinen (Halbautomaten) für das Rollnahtschweissen der Überlappung von aus einem gekrümmten Blechabschnitt gebildetem Schweissgut, z.B. Blechrohre mit einer "Butterfly-Überlappung" oder Behälterzargen, sind bekannt. Die eigentliche Schweisselektrode kann dabei von einer ständig erneuerten Drahtelektrode gebildet werden, die auf den Elektrodenrollen läuft. Bei diesen Maschinen erfolgt die Beschickung von der Schweissrollenseite her, an welche in Beschickungsrichtung eine Führungsschiene, die sogenannte Z-Schiene anschliesst, in welche die zu schweissenden Ränder des Schweissgutes eingeführt werden müssen. Die Bedienungsperson öffnet dazu das gerundete Schweissgut und führt es an den Schweissrollen vorbei in die Z-Schiene ein. Danach werden auf bekannte Weise am von den Schweissrollen entfernten Ende des Schweissgutes Klemmbacken am Schweissgut in Eingriff gebracht, die an einem Wagen angeordnet sind, und das Schweissgut wird mit von der Z-Schiene in Überlappung gebrachten Rändern entgegen der Beschickungsrichtung durch die Schweissrollen transportiert, wobei zu Beginn der Schweissung die obere Schweissrolle aus ihrer Ruheposition in die Schweissstellung abgesenkt wird. Die Bedienungsperson hält dabei am Schweissbeginn das Schweissgut so fest, dass es in die Nuten der Z-Schiene gedrückt wird. Die Naht wird zwischen den Rollenelektroden bzw. Drahtelektroden geschweisst und das geschweisste Gut wird von der Bedienungsperson an der Beschickungsseite entgegengenommen, wonach eine erneute Beschickung mit neuem Schweissgut erfolgt. Die obere Schweissrolle ist dabei auf bekannte Weise zur Aufbringung der Schweisskraft (z.B. ca. 80 kg) federnd angeordnet und erlaubt ein geringes Einsinken in das Schweissgut, welches beim Schweissen zerquetscht wird. Die obere Schweissrolle ist ferner nach oben von der feststehenden unteren Schweissrolle wegklappbar, um die Maschine warten zu können und den Schweissdraht einfädeln zu können sowie um im Betrieb entstehende Drahtschlaufen durch Zug auf den Draht auflösen zu können. Eine bekannte Maschine dieser Bauweise ist z.B. die halbautomatische Rollnahtschweissmaschine ZSHa oder CSTW der Firma SMAG Schweissmaschinen AG, Bergdietikon, Schweiz. Die Handbeschickung ist für Einzelstücke oder sehr kleine Serien gut geeignet. Es besteht jedoch auch der Wunsch, solche Maschinen für grössere Stückzahlen automatisch zu beschicken.

Aus diesem Grund sind automatische Beschickungseinrichtungen geschaffen worden, welche das Schweissgut seitlich in die bestehende Z-Schiene hineinrunden, so dass sich ein Beschicken hinter den Schweissrollen ergibt. Wird das derart in die Z-Schiene hineingerundete Blech von den hinteren Klemmbacken erfasst und gegen die Schweissrollen geschoben, so ergibt sich eine ungenügend genau definierte Kantenlage in der Z-Schiene bei den Schweissrollen, weshalb diese bekannten automatischen Beschickungseinrichtungen im Bereich der Schweissrollen Kalibrierwerkzeuge, z.B. einen Rollenkranz oder Diabolo-Rollen, aufweisen, um eine genügende Nahtqualität zu gewährleisten. Solche Kalibrierwerkzeuge sind aufwendig in der Herstellung und Justierung. Da sich in ihnen ferner eine Relativbewegung zwischen Schweissgut und Werkzeug ergibt, stellen sie bei sehr empfindlichem Schweissgut, z.B. INOX-Gebindezargen, Probleme, da Abdrücke des Werkzeuges auf dem Schweissgut entstehen können.

Der Erfindung liegt daher die Aufgabe zugrunde die Beschickung einer Rollnahtschweissmaschine der eingangs genannten Art generell zu verbessern und insbesondere eine vereinfachte und kostengünstige automatische Beschickung zu ermöglichen, welche auch eine Schweissung von empfindlichem Schweissgut ermöglicht.

Dies wird bei dem eingangs genannten Verfahren mit den kennzeichnenden Merkmalen des Anspruchs 1 erreicht. Bei der eingangs genannten Schweissmaschine wird die Aufgabe mit den kennzeichnenden Merkmalen des Anspruchs 10 gelöst.

Dadurch, dass die nach Stand der Technik feststehende untere Schweissrolle so angeordnet wird, dass sie vom Einlaufbereich der Führungsmaschine wegbewegbar ist, kann die Beschickung von vorne viel einfacher erfolgen, insbesondere ohne speziell weites Öffnen des gerundeten Schweissgutes und mit geradlinigem Einfahren der Kanten in die Nuten der Schiene, was die Handbeschickung und insbesondere die automatische Beschickung wesentlich erleichtert, indem letztere nun auch von vorne erfolgen kann. Nach dem Beschicken wird diese Schweissrolle in die normale Position zurückbewegt und die Schweissung erfolgt auf herkömmliche Weise durch Bewegung der anderen Schweissrolle in die Schweissposition und Hindurchbewegen des Gutes durch die Rollen. Bevorzugt ist es dabei, wenn die automatische Beschickungseinrichtung das Schweissgut bis kurz nach Beginn des Schweissvorganges hält, so dass die Kantenlage des Schweissgutes in der Führungsschiene bzw. Z-Schiene definiert ist, was auf einfache Weise den Verzicht auf die genannten Werkzeuge ermöglicht. Sobald die Schweissung für definierte Verhältnisse am Anfang der Schweissnaht bzw. der überlappenden Kante gesorgt hat, kann das weitere Halten unterbleiben bzw. genügt das bereits bekannte Halten am hinteren Ende durch die bekannten Klemmbacken.

Im folgenden werden Ausführungsbeispiele anhand der Figuren näher erläutert. Dabei zeigt
Figur 1 den Schweissarm einer Schweissmaschine für manuelle und automatische Beschickung in Ruheposition;
Figur 2 eine vergrösserte Teilansicht des Armes von Figur 1 von vorne;
Figur 3 den Schweissarm von Figur 1 in Beschickungsposition;
Figur 4 eine vergrösserte Teilansicht von vorne auf den Schweissarm von Figur 3 in Beschickungsposition, und die
Figuren 5a - 5c schematisch verschiedene Schritte beim Beschicken einer Schweissmaschine.

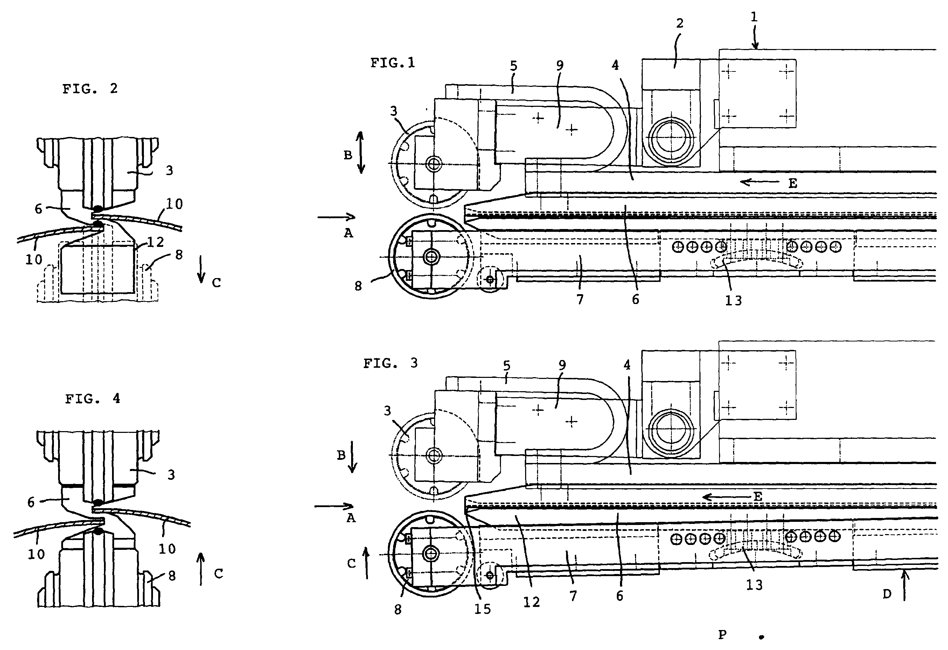

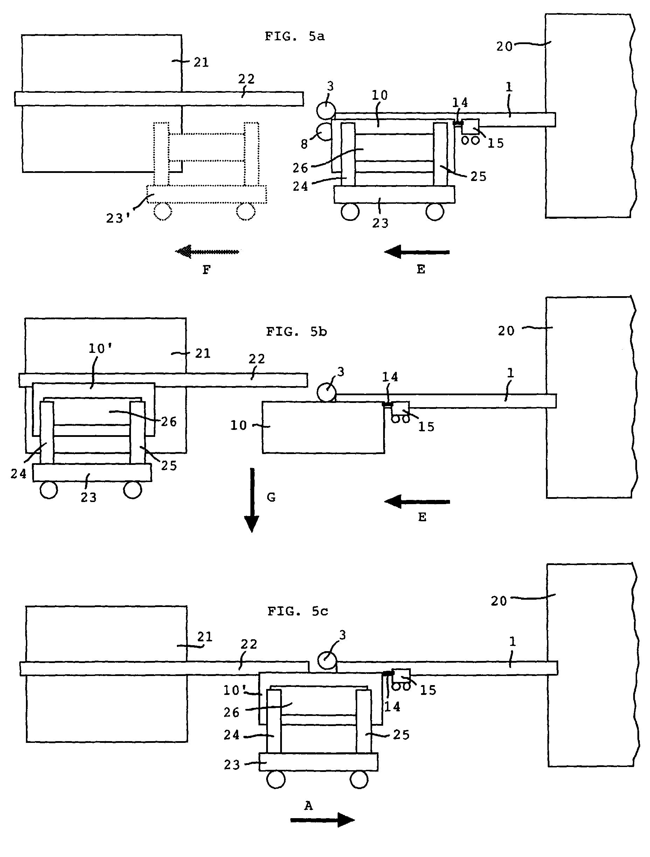

Figur 1 zeigt die Armkonstruktion einer ansonsten nicht näher dargestellten Schweissmaschine, deren Aufbau indes dem Fachmann bekannt ist und hier nicht näher dargestellt zu werden braucht. Die Schweissmaschine 20 (Figur 5a) umfasst insbesondere ein Maschinengestell, in welchem der Arm 1 gehalten ist sowie Mittel zur Erzeugung des Schweissstromes und Mittel zur Erzeugung der verschiedenen Bewegungen. Die Schweisselektrode kann vom Schweissdraht gebildet werden, welcher auf bekannte Weise auf den Schweissrollen läuft. Für den Aufbau einer solchen bekannten Schweissmaschine kann z.B. auf die eingangs genannten Schweissmaschinen der Firma SMAG verwiesen werden. Der in Figur 1 generell mit 1 bezeichnete Arm weist einen Oberarm 2 auf, eine Z-Schiene 6 und einen Unterarm 7, welche im gezeigten Beispiel eine Einheit bilden, was für die Stabilität des Arms 1 vorteilhaft ist. Am Oberarm 2 ist auf bekannte Weise an einem schwenkbaren Ausleger 9 die in der Figur obere Schweissrolle 3 angeordnet. Der Schwenkarm 9 kann in Richtung des Pfeiles B nach oben und nach unten geschwenkt werden, wobei die in der Figur gezeigte obere Schwenkposition die Ruheposition darstellt, in welcher auf bekannte Weise eine Handbeschickung der Schweissmaschine erfolgen kann. Von der Ruheposition wird der Ausleger 9 mit der Schweissrolle 3 zur Aufbringung der Schweisskraft nach unten in die Schweissposition geschwenkt, was bekannt ist und hier nicht weiter erläutert wird. Die obere Schweissrolle 3 wird auf bekannte Weise über die Stromschienen 4 und 5 mit dem Schweissstrom versorgt. Unterhalb der Stromschiene 4 ist die Z-Schiene 6 angeordnet. Diese weist auf bekannte Weise seitliche Nuten auf, in welche die Ränder des Schweissgutes eingelegt werden, um von der Z-Schiene 6 in die gewünschte Überlappungsposition gebracht zu werden. Unterhalb der Z-Schiene ist der Unterarm 7 angeordnet, welcher die in der Figur untere Schweissrolle 8 trägt. In der Figur nicht dargestellt, sind die an sich bekannten Zuführungen für den auf den Schweissrollen 3 und 8 laufenden Schweissdraht. Die Schweissmaschine könnte aber auch eine solche ohne Schweissdraht sein. Nach Stand der Technik sind die genannten Elemente oberer Arm 2, die Stromschiene 4, die Z-Schiene 6 und der Unterarm 7 fest miteinander verschraubt. Die Beschickung einer solchen Maschine erfolgt von vorne her, in Richtung des Teiles A. Dazu öffnet die Bedienungsperson von Hand die überlappenden Kanten des Schweissgutes, welches z.B. ein zu einem Rohr gebogener Blechabschnitt oder zu einer Behälterzarge gebogener Blechabschnitt ist, und führt diese Kanten um die untere Schweissrolle herum in Richtung des Pfeiles A in die Z-Schiene ein und schiebt das Schweissgut in Richtung des Pfeiles A nach hinten, bis auch das hintere Ende des Schweissgutes die Schweissrollen passiert hat und das Schweissgut vollständig in der Z-Schiene liegt. In Figur 2 ist ersichtlich, dass die dort nur mit unterbrochenen Linien dargestellte untere Schweissrolle 8 den direkten Einschub des Schweissgutes 10 in die Z-Schiene 6 verhindert, so dass die Bedienungsperson die genannte Öffnungsbewegung ausführen muss, da aus schweisstechnischen Gründen die Rolle 8 mit ihrer oberen Fläche (die in Figur 2 den als schwarze Ellipse dargestellten Schweissdraht trägt) ein wenig oberhalb der unteren Nut der Z-Schiene liegt. Befindet sich das Schweissgut vollständig in der Z-Schiene, so wird es auf bekannte Weise am vorderen, von den Schweissrollen 3, 8 entfernteren Ende von Klemmbacken 14 (Fig. 5a) erfasst. Es erfolgt dann auf bekannte Weise das Absenken des oberen Rollenkopfes 3 in die Schweissposition und nachfolgend das Transportieren des Schweissgutes in Richtung des Pfeiles E, also entgegen der Beschickungsrichtung A, durch die Schweissrollen hindurch, wodurch die Schweissung der Naht erfolgt.

Gemäss der Erfindung ist nun die in der Figur untere Schweissrolle 8, welche nach Stand der Technik vor der Z-Schiene liegt, von deren Einlauf 15 weg bewegbar, wie dies in Figur 3 dargestellt ist. Dort ist die Ruhe- bzw. Beschickungsposition einer Schweissmaschine gemäss der Erfindung dargestellt. Dabei ist in dem gezeigten Beispiel der untere Schweissarm 7 in Richtung des Pfeiles C nach unten bzw. wieder nach oben in die in Figur 1 gezeigte Stellung schwenkbar. Bei der in Figur 3 gezeigten unteren Schwenkstellung gibt die Schweissrolle 8 den Einlauf 15 der Z-Schiene 6 frei, wie dies in Figur 4 dargestellt ist, welche die Position von Figur 3 in Ansicht von vorne zeigt. Bei dieser Position der Schweissrolle 8 kann ein einfaches Beschicken von vorne erfolgen, da ein spezielles Öffnen des Schweissgutes zur Vermeidung der Schweissrolle 8 nicht mehr notwendig ist. Mit dem Schweissgut kann daher geradlinig in die Z-Schiene 6 hineingefahren werden, was das Beschicken der Maschine mit einer automatischen Beschickungsvorrichtung wesentlich erleichtert. Diese kann z.B. aus einem Roboter oder aus einem speziellen Ladewagen bestehen, welche die Schweissgutstücke aus einer Rundungseinrichtung übernehmen und danach in die Z-Schiene 6 einfügt. Die Z-Schiene 6 kann dazu mit einem besonders gross ausgestalteten Einlaufbereich 15 versehen sein, der das automatische Einführen erleichtert. Nach erfolgter Beschickung wird der Unterarm 7 wieder hochgeschwenkt, so dass er sich in der in Figur 1 gezeigten fixen Position nach Stand der Technik befindet. Es werden dann die bereits erwähnten Klemmelemente bzw. Klemmbacken betätigt, der obere Rollenkopf 3 in die Schweissposition abgesenkt und der eigentliche Schweissvorgang durch Transport des Schweissgutes in Richtung des Pfeiles E durchgeführt.

Die Bewegung der vor der Z-Schiene 6 liegenden Schweissrolle 8 nach unten kann auf verschiedenste Weise bewirkt werden. Es kann eine Parallelverschiebung des Unterarme 7 nach unten oder nur der Schweissrolle 8 nach unten erfolgen, oder es könnte eine Drehung der Schweissrolle um die Längsachse des Armes 7 erfolgen, was ebenfalls eine Wegbewegung des den Einlauf von vorne blockierenden Rollenteils ergibt. In dem gezeigten Beispiel erfolgt eine Schwenkbewegung mittels einer Kulisse 13. Dabei ist in der Z-Schiene 6 eine Kulisse angeordnet. Das Kulissengegenstück ist im Unterarm 7 angeordnet, was ein Schwenken des Unterarme um die starre Z-Schiene erlaubt. Die Seitenführung des Unterarms 7 wird dabei weiterhin durch die Seitenflanken 12 der Z-Schiene 6 gewährleistet, so dass sich weiterhin eine stabile Einheit ergibt. Anstelle einer Kulisse 13, welche die Schwenkachse des Unterarme 7 ungefähr in die Position P verlegt, kann natürlich auch direkt eine Drehachse im Unterarm und der Z-Schiene vorgesehen sein. Die Schwenkbewegung des Unterarme 7 kann durch ein am hinteren - nicht mehr dargestellten - Ende des Unterarme angeordnetes Betätigungsmittel erfolgen, z.B. ein pneumatisches oder hydraulisches Betätigungsmittel. Dieses drückt das hintere Ende des Unterarms in Pfeilrichtung D nach oben, um ein Herabschwenken der Schweissrolle 8 zu bewirken bzw. drückt das Ende nach unten, um ein Hinaufschwenken der Schweissrolle 8 in die Normalposition bzw. Schweissposition zu bewirken.

Die dargestellte Position kann natürlich auch um 180° gedreht werden, so dass sich der in der Figur als Unterarm 7 gezeigte Arm oben befindet und der in der Figur als Oberarm 2 gezeigte Arm unten befindet. Dies kann z.B. erwünscht sein, wenn zwei derartige Schweissmaschinen in Tandemkonfiguration angeordnet sind, so dass aus zwei Halbschalen bestehendes Schweissgut zunächst in die eine Schweissmaschine geladen und dort verschweisst wird und nach dem Ausstossen aus dieser in Ausstossrichtung direkt weiter in eine in der gleichen Achse, aber höhenversetzt angeordnete zweite Schweissmaschine geladen wird, um dort die zweite Schweissnaht zu schweissen. Bei dem Schweissgut kann es sich um beliebig gerundetes oder gebogenes Schweissgut handeln, bei dem eine Überlappnaht zu schweissen ist.

Die Beschickung der beschriebenen halbautomatischen Schweissmaschine erfolgt über eine Beschickungseinrichtung (Automatisierung). Diese umfasst einen Rundapparat, welcher von einem Blechstapel her mit Blechen versehen wird und eine Laufschiene, in welche das Blech hineingerundet wird, derart, dass es mit seinen Längskanten darin gefangen ist. Z-Schiene und Laufschiene fassen die Zarge in der gleichen Weise. Werden nun Rundapparat und Laufschiene örtlich derart angeordnet und ausgebildet, dass die Beschickung von der Ausgabeseite des Schweissarms her erfolgt, kann sie mit der erfindungsgemässen Schweissmaschine zur automatisch arbeitenden Schweissanlage gekoppelt werden. Der Beschickungsantrieb wird dann mit dem Antrieb für das Verschwenken des Unterarme gekoppelt, so dass die Beschickung dann und nur dann erfolgt, wenn der Unterarm in die entsprechende Beschickungeposition, d.h. die untere Schwenkposition, verschwenkt ist. Zur Übergabe der Zarge wird die Laufschiene der Beschickungsmaschine mit der Z-Schiene der Schweissmaschine in eine gemeinsame Längsachse gebracht, so dass das Gebinde bzw. die Zarge der Laufschiene entlang in die Z-Schiene verschoben werden kann. Während der Schweissung wird dann die Laufschiene erneut verschoben, derart, dass die Zarge durch die Schweissrollen hindurchlaufen kann, ohne wieder in die Laufschiene zu geraten. Nach fertigem Schweissprozess wird die Zarge weitertransportiert und die Laufschiene für den Einschub der nächsten Zarge wieder in eine Linie mit der Z-Schiene gebracht.

Auch ein Roboter kann die Aufgabe der Beschickung übernehmen. Vorteilhafterweise erfasst der Roboter dann die Zarge stirnseitig mit einer Zweifach-Klemmzange so, dass der stirnseitige Zargenrand nahe der zu verschweissenden Zargenlängskante, je nahe bei einer der Längskanten, klemmend und damit unverrückbar erfasst und in die Schweissmaschine eingeschoben wird. Die Klemmung und damit die stirnseitige Fixierung der Längskanten der Zarge, wird erst nach dem ersten Schweisspunkt gelöst, so dass die Kantenlage bis zur Vollendung der Schweissung definiert bleibt.

Anhand der Figuren 5a - 5c kann die bereits erläuterte bevorzugte Beschickungseinrichtung bzw. das Verfahren noch genauer erläutert werden.

Die Figuren zeigen dabei die Schweissmaschine 20 mit dem Maschinengrundkörper und dem daran angeordneten Arm 1, welcher in diesen Figuren nicht weiter in Oberarm, Z-Schiene und Unterarm unterschieden ist, um die Figuren zeichnerisch einfacher zu halten. Mit 21 ist andererseits eine Beschickungseinrichtung generell als Block bezeichnet, welche wie bereits erwähnt eine Rundungestation für Bleche aufweist, welche z.B. mittels eines Abstaplers von einem Stapel abgestapelt und in die Rundungsstation eingeführt werden. Das Runden erfolgt dabei derart, dass die Blechkanten des gerundeten Bleches in Nuten der Laufschiene 22 eingeführt werden, welche in gleicher Art wie eine Z-Schiene ausgestaltet ist. Die Beschickungseinrichtung weist ferner einen Laufwagen 23 auf und Halterungen 24, 25 und 26 für das gerundete Schweissgut.

Die Figur 5a zeigt dabei eine Stellung, in welcher das gerundete Schweissgut 10 durch den Laufwagen 23, der z.B. auf nicht dargestellten Schienen läuft, in die Schweissmaschine verbracht worden ist. Das Schweissgut wird dabei durch die Halterungen 24, 25 und 26 des Wagens 23 derart gehalten, dass die Kanten des Schweissgutes, z.B. einer gerundeten Behälterzarge, in die Nuten der Z-Schiene des Arms 1 hineingedrückt werden. Ausgehend von dieser in Figur 5a gezeigten Stellung beginnt die Schweissung mittels der Schweissrollen 3 und 8, wie dies grundsätzlich bekannt ist. Der Wagen 23 fährt dabei zu Beginn der Schweissung unter weiterem Festhalten des Schweissgutes 10 und Positionieren desselben in den Nuten der Z-Schiene in Richtung des Pfeiles E. Die hinteren, bereits erwähnten Klemmbacken 14 der Schweissmaschine, die z.B. an einem Wagen 15 geführt sind, halten dabei das hintere Ende des Schweissgutes 10. Nachdem der Anfang der Schweissnaht durch die Schweissrollen geschweisst worden ist, kann der Wagen 23 das Schweissgut 10 aus seiner Halterung entlassen, wozu diese so ausgeführt ist, dass sie sich entsprechend öffnen kann, um das Schweissgut freizugeben. Dieses wird nun auf bekannte Weise durch die Schweissrollen angetrieben und allenfalls auch noch durch den Wagen 15 mit den Klemmbacken 14 angetrieben, zur Schweissung der Naht in Richtung des Pfeiles E bewegt. Ein Werkzeug ist dabei nicht erforderlich, da der Schweissnahtbeginn noch durch die Halterung des Wagens 23 auf korrekte Weise erfolgt ist und die Position der Schweissgutkanten in der Z-Schiene nun dadurch von vorne her vorgegeben ist und von hinten durch die Klemmbacken 14. Der Wagen 23 fährt nach dem Loslassen des Schweissgutes in Richtung des Pfeiles F zur Beschickungsstation, wobei er dies mit grösserer Geschwindigkeit als der Schweissgeschwindigkeit tun wird, um während des Schweissens bereits ein neues Schweissgut aufnehmen zu können. Figur 5a zeigt den in die Beschickungsposition zurückfahrend Wagen mit unterbrochenen Linien als Wagen 23'.

Die Figur 5b zeigt nun, wie der Wagen 23 in der Beschickungseinrichtung 21 mit einem neuen Schweissgut 10' beladen worden ist. Dieses wird durch die Rundungsstation so gerundet, dass es mit seinen Kanten in die Nuten der Laufschiene 22 hineingelangt. Dies erfolgt bei geöffneten Halteelementen 24-25 des Wagens 23. Nach dem Runden schliessen diese Halteelemente sich wieder zur Einnahme der Halteposition und halten daher das Schweissgut 10' sicher in den Nuten der Z-schienenförmig ausgebildeten Laufschiene 22. In der Zwischenzeit ist durch die Schweissmaschine das Schweissgut 10 geschweisst worden und wird in Richtung des Pfeiles G durch ein Transportmittel aus der Schweissmaschine entfernt.

In Figur 5c ist nun die erneute Beschickung der Schweissmaschine mit dem neuen Schweissgut 10' gezeigt. Zu diesem Zweck wird die Laufschiene 22 so abgesenkt, wozu pneumatische oder hydraulische oder elektromotorische Mittel vorgesehen sein können, dass das vordere Ende der Laufschiene 22 mit dem vorderen Ende der Z-Schiene des Arms 1 fluchtet. Der Wagen 23 wird dann in Richtung des Pfeiles A bewegt, wodurch das Schweissgut 10' in die Z-Schiene des Schweissarmes 1 eingeführt wird. Das in Beschickungsrichtung vordere bzw. in Schweissrichtung hintere Ende des Schweissgutes 10' wird dabei in der Schweissmaschine wiederum durch die Klemmbacken 14 aufgenommen und gehalten und der Wagen 15 bewegt sich synchron mit dem Wagen 23 in Richtung des Pfeiles A. Am Ende der Bewegung in Pfeilrichtung A wird wieder die Position eingenommen, wie sie in Figur 5a gezeigt ist, so dass erneut die Schweissung unter Halterung im Wagen 23 beginnen kann und nachfolgend das Loslassen des Schweissgutes 10' durch den Wagen und dessen erneutes Verfahren in Pfeilrichtung F, was zur erneuten Beschickung mit neuem Schweissgut führen kann. Die Laufschiene 22 ist dabei wieder nach oben in die Position gemäss Figur 5a bewegt worden, damit das Schweissgut 10' frei aus der Schweissmaschine austreten kann und nicht erneut in die Laufschiene 22 gerät.

## Patentansprüche

1. Verfahren zur Beschickung einer Rollnahtschweissmaschine zur Schweissung einer Überlappungsnaht, bei welchem eine schweissrollenseitige Beschickung (A) mit dem Schweissgut (10) in eine Führungsschiene (6) und nachfolgend ein entgegen der Beschickungsrichtung durchgeführtes Schweissen erfolgt, dadurch gekennzeichnet, dass zur Beschickung die vor dem Einlauf (15) der Führungsschiene (6) befindliche Schweissrolle (8) wegbewegt wird, so dass der Einlauf (15) der Führungsschiene (6) direkt von vorne beschickbar ist, und nach der Beschickung diese Schweissrolle in die vor der Führungsschiene liegende Ruheposition zurückbewegt wird.

2. Verfahren nach Anspruch 1, dadurch gekennzeichnet, dass die Schweissrolle (8) durch eine Schwenkbewegung weg- und zurückbewegt wird.

3. Verfahren nach Anspruch 2, dadurch gekennzeichnet, dass der Drehpunkt (P) der Schwenkbewegung unterhalb des Unterarmes (7) der Schweissmaschine liegt.

4. Verfahren nach einem der Ansprüche 1 bis 3, dadurch gekennzeichnet, dass die Beschickung von vorne mittels einer automatischen Beschickungseinrichtung erfolgt, welche insbesondere eine Halterung für das Schweissgut zu Beginn des Schweissvorganges bildet.

5. Verfahren nach Anspruch 4, dadurch gekennzeichnet, dass die automatische Beschickungseinrichtung das Schweissgut in die Führungsschiene einbringt und eine Halterung für das Schweissgut beim Schweissbeginn bildet, die die Kanten des Schweissgutes in die Nuten der Führungsschiene drückt.

6. Verfahren nach Anspruch 4 oder 5, dadurch gekennzeichnet, dass die automatische Beschickungseinrichtung eine Laufschiene aufweist, die zur Beschickung fluchtend mit der Führungsschiene der Schweissmaschine angeordnet und nach der Beschickung von der Führungsschiene der Schweissmaschine wegbewegt wird, um den Austritt des Schweissgutes aus der Schweissmaschine zu ermöglichen.

7. Verfahren nach Anspruch 6, dadurch gekennzeichnet, dass die automatische Beschickungseinrichtung einen das Schweissgut haltenden Wagen aufweist, der mit der Laufschiene der Beschickungseinrichtung zusammenwirkt, in einer Beladeposition das Schweissgut aufnimmt und hält, nachfolgend das Schweissgut in die Schweissmaschine einführt, während des Schweissbeginns festhält, nach Schweissbeginn das Schweissgut loslässt und in die Beladeposition zurückkehrt.

8. Verfahren nach Anspruch 7, dadurch gekennzeichnet, dass bei der Beladeposition ein Runden des Schweissgutes und ein Einführen von dessen Kanten in die Laufschiene erfolgt.

9. Verfahren nach Anspruch 5, dadurch gekennzeichnet, dass die automatische Beschickungseinrichtung von einem Roboter gebildet wird, der Halteelemente für das Halten des gerundeten Schweissgutes aufweist.

10. Rollnahtschweissmaschine mit einer Führungsschiene (6) für die Kanten des überlappend zu schweissenden Schweissgutes (10) sowie mit zwei Schweissrollen (3, 8), von denen die erste Schweissrolle (3) zur Aufbringung der Schweisskraft gegen die vor dem Einlaufbereich (15) der Führungsschiene angeordnete, zweite Schweissrolle (8) bewegbar ist, dadurch gekennzeichnet, dass die zweite Schweissrolle (8) zur Beschickung der Führungsschiene mit dem Schweissgut (10) derart bewegbar ist, dass die Schweissrolle (8) den Einlaufbereich (15) freigibt.

11. Rollnahtschweissmaschine nach Anspruch 10, dadurch gekennzeichnet, dass die zweite Schweissrolle (8) um eine Schwenkachse (P) wegschwenkbar ist.

12. Rollnahtschweissmaschine nach Anspruch 11, dadurch gekennzeichnet, dass die Schwenkung mittels einer Kulissenführung (13) erfolgt.

13. Automatische Beschickungseinrichtung für eine Rollnahtschweissmaschine nach einem der Ansprüche 10 bis 13, dadurch gekennzeichnet, dass sie zur Beschickung der Schweissmaschine von der Ausstossseite des Schweissarmes her, entgegen der Schweissrichtung bzw. Ausstossrichtung, ausgebildet ist.

14. Automatische Beschickungseinrichtung nach Anspruch 13, dadurch gekennzeichnet, dass diese eine zeitweise fluchtend mit der Führungsschiene der Schweissmaschine positionierbare Laufschiene aufweist, über welche das Schweissgut von einem angetriebenen Wagen gehalten in die Schweissmaschine einführbar ist.

15. Automatische Beschickungseinrichtung nach Anspruch 14, dadurch gekennzeichnet, dass sie zum Halten des Schweissgutes in der Führungsschiene der Schweissmaschine zu Beginn des Schweissvorganges ausgestaltet ist.

16. Automatische Beschickungseinrichtung nach einem der Ansprüche 14 bis 15, dadurch gekennzeichnet, dass die Laufschiene der Beschickungseinrichtung zur Aufnahme der Kanten eines aus einer Rundungsstation austretenden gerundeten Schweissgutes angeordnet ist.

17. Automatische Beschickungseinrichtung nach Anspruch 13, dadurch gekennzeichnet, dass die als Roboter mit einem Halteelement zum stirnseitigen Halten des Schweissgutes ausgebildet ist.

18. Anlage mit mindestens einer Rollnahtschweissmaschine nach einem der Ansprüche 10 bis 12 und mindestens einer automatischen Beschickungsstation nach einem der Ansprüche 13 bis 17.

19. Anordnung zweier Rollnahtschweissmaschinen nach einem der Ansprüche 10 bis 13, dadurch gekennzeichnet, dass deren Beschickungsachsen derart angeordnet sind, dass das von der einen Maschine ausgegebene Schweissgut durch eine Ladeeinrichtung direkt in die Führungsschiene der anderen Maschine einführbar ist.
